# EUROPÄISCHE PATENTSCHRIFT

(11) **EP 3 196 427 B1**
(45) Veröffentlichungstag und Bekanntmachung des Hinweises auf die Patenterteilung: **20.03.2019**
(21) Anmeldenummer: 16202647.0
(22) Anmeldetag: 07.12.2016
(51) Int. Cl.: F01D 25/24, F02C 7/20, B64D 27/26

(54) **STRÖMUNGSMASCHINE MIT EINER IN EINER AUSNEHMUNG EINER WANDUNG ANORDENBAREN EINSETZEINRICHTUNG**
TURBOMACHINE WITH A PANEL IN A RECESS OF A WALL
TURBOMACHINE COMPRENANT UN PANNEAU MONTÉ DANS UN ÉVIDEMENT D'UNE PAROI

(30) Priorität: 22.01.2016 DE 102016101168
(43) Veröffentlichungstag der Anmeldung: 26.07.2017
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Ruß, Patrick, 12109 Berlin (DE); Todorovic, Predrag, 10437 Berlin (DE); Kubisch, Thomas, 15537 Königs-Wusterhausen (DE); Schacht, Michael, 10319 Berlin (DE)
(74) Vertreter: Schmidt, Martin Michael

(56) Entgegenhaltungen:
- EP-A2- 1 808 581
- US-A- 5 157 915
- US-A- 5 603 471
- US-A1- 2010 047 066

## Beschreibung

Die Erfindung betrifft eine Strömungsmaschine mit einer sich zumindest bereichsweise umfangsseitig zu einer Zentralachse der Strömungsmaschine erstreckenden Wandung und mit wenigstens einer Einsetzeinrichtung, die im Bereich einer in der Wandung angeordneten Ausnehmung lösbar mit der Wandung verbindbar ist, gemäß der im Oberbegriff des Patentanspruches 1 näher definierten Art.

Aus der Praxis ist ein Strahltriebwerk mit einer einen Strömungskanal umfassenden Wandung bekannt. Um einen Zugangsbereich zu einem Inneren des Strahltriebwerks durch die Wandung zu schaffen, weist die Wandung eine Ausnehmung auf, die mit einer Einsetzplatte verschließbar ist, wobei die Einsetzplatte umfangsseitig über eine Vielzahl von Schrauben lösbar mit der Wandung verbunden ist.

Zur Erzielung einer gewünschten Dichtigkeit gegenüber einem Luftdurchtritt und zur Erzielung einer hohen Stabilität eines Verbindungsbereichs zwischen der Einsetzplatte und der Wandung ist die Einsetzplatte über eine große Anzahl von die Einsetzplatte umfangsseitig umgebenden Schrauben an der Wandung gehalten. Eine Montage bzw. Demontage einer derartigen Einsetzplatte ist dadurch allerdings nachteilhafterweise aufwändig. Zudem ist eine Feuer- bzw. Flammfestigkeit gegebenenfalls nur auf sehr aufwändige Weise zu erzielen.

Aus der US 2010/047066 A1 ist eine Strömungsmaschine mit einer sich zumindest bereichsweise umfangsseitig zu einer Zentralachse der Strömungsmaschine erstreckenden Wandung bekannt. Die Wandung weist eine Rahmenstruktur auf, die mehrere Ausnehmungen bildet. Es sind mehrere Einsetzeinrichtungen vorgesehen, die im Bereich von den in der Wandung angeordneten Ausnehmungen lösbar mit der Wandung verbindbar sind.

Des Weiteren ist in der EP 1 808 581 A2 eine Strömungsmaschine mit einer Wandung und mit einer Einsetzeinrichtung beschrieben. Die Einsetzeinrichtung ist im Bereich einer in der Wandung angeordneten Ausnehmung lösbar mit der Wandung verbindbar.

Es ist Aufgabe der vorliegenden Erfindung, eine Strömungsmaschine der eingangs genannten Art zur Verfügung zu stellen, bei der eine Einsetzeinrichtung auf einfache und schnelle Weise im Bereich einer Ausnehmung in Wirkverbindung mit der Wandung bringbar ist, wobei der Verbindungsbereich eine hohe Stabilität aufweist und zudem im Betrieb der Strömungsmaschine eine Dichtheit zwischen der Wandung und der Einsetzeinrichtung verbessert ist.

Erfindungsgemäß wird diese Aufgabe mit einer Strömungsmaschine mit den Merkmalen des Patentanspruches 1 gelöst.

Es wird eine Strömungsmaschine mit einer sich zumindest bereichsweise umfangsseitig zu einer Zentralachse der Strömungsmaschine erstreckenden Wandung vorgeschlagen, wobei die Wandung eine Rahmenstruktur aufweist, die mehrere Ausnehmungen bildet. Des Weiteren sind mehrere Einsetzeinrichtungen vorgesehen, die im Bereich von den in der Wandung angeordneten Ausnehmungen lösbar mit der Wandung verbindbar sind und die jeweils eine einer Form einer Ausnehmung der Rahmenstruktur im Wesentlichen entsprechende Form aufweisen.

Erfindungsgemäß weisen die Einsetzeinrichtungen jeweils eine Verbindungseinrichtung auf, mittels den die Einsetzeinrichtungen in Wirkverbindung mit Verbindungseinrichtungen der Wandung bringbar sind. Zusätzlich haben die Verbindungseinrichtungen der Einsetzeinrichtungen jeweils eine sich in montiertem Zustand der Einsetzeinrichtungen zumindest bereichsweise im Wesentlichen in radialer Richtung der Strömungsmaschine erstreckende Vorkragungen, die in montiertem Zustand der Einsetzeinrichtungen in Nuten der Verbindungseinrichtungen der Wandung eingreifen. Die Verbindungseinrichtungen der Wandung weisen sich in montiertem Zustand der Einsetzeinrichtung zumindest bereichsweise im Wesentlichen in radialer Richtung der Strömungsmaschine erstreckende Vorkragungen auf, die in montiertem Zustand der Einsetzeinrichtungen in Nuten der Verbindungseinrichtungen der Einsetzeinrichtungen eingreifen. Die Wandung und die Einsetzeinrichtungen weisen jeweils mehrere Vorkragungen und Nuten auf. Die Nuten und die Vorkragungen der Einsetzeinrichtungen und die Nuten und die Vorkragungen der Wandung bilden im Querschnitt ein wellenförmiges oder ein zackenförmiges Profil. Jede Einsetzeinrichtung ist im Bereich einer Ausnehmung lösbar in Wirkverbindung mit der Rahmenstruktur bringbar.

Wenn die Ausnehmungen der insbesondere mit stabförmigen Elementen ausgeführten Rahmenstruktur und die insbesondere plattenförmig ausgeführten Einsetzeinrichtungen dreiecksförmig ausgebildet sind, ist eine Führung von sämtlichen im Betrieb der Strömungsmaschine an der Wandung angreifenden Kräften durch die Einsetzeinrichtungen verbessert. Im Betrieb der Strömungsmaschine im Bereich der Wandung wirkende Lasten können in sämtlichen Orientierungen, d. h. auch wenn diese bezüglich der Längsrichtung und/oder der Umfangsrichtung der Strömungsmaschine schräg wirken, auf günstige Weise durch die Einsetzeinrichtungen und die Rahmenstruktur der Wandung geführt werden. Somit können die Ausnehmungen bzw. Wartungsöffnungen vorteilhafterweise groß ausgeführt werden, ohne dass ein Kraftfluss im Bereich der Wandung hierdurch negativ beeinflusst wird. Bereits mit einer geringeren Anzahl von Ausnehmungen können hierdurch sämtliche durch die Ausnehmungen zu erreichenden Bereiche der Strömungsmaschine zugänglich sein.

Zudem können bei der erfindungsgemäßen Ausführung vorteilhafterweise auch bei klein ausgeführten Strömungsmaschinen verhältnismäßig große Ausnehmungen vorgesehen werden, so dass hierbei eine Zugänglichkeit von innerhalb der Ausnehmungen liegenden Bereichen, wie z. B. einem Kerntriebwerk, beispielsweise zu Wartungszwecken für einen Werker verbessert ist. Eine Zugänglichkeit der inneren Bereiche ist insbesondere dann verbessert, wenn die Rahmenstruktur mehrere, vorzugsweise modular ausgeführte Einsetzeinrichtungen aufweist.

Neben der dreieckförmigen Ausführung der Ausnehmungen der Rahmenstruktur können diese auch sechseckförmig und/oder achteckförmig ausgeführt sein, wobei die Ausnehmungen mit entsprechend sechseckförmig und/oder achteckförmig ausgeführten Einsetzeinrichtungen in Wirkverbindung bringbar sind.

Die Rahmenstruktur stellt dabei eine insbesondere skelettartige, tragende Struktur dar, die vorzugsweise durch mehrere gerade oder gebogene, stabförmige und miteinander verbundene Elemente gebildet ist. Die Rahmenstruktur kann einen räumlichen Rahmen, einen sogenannten Space Frame, oder eine Fachwerkstruktur, eine sogenannte Truss Structure, bilden.

Bei der erfindungsgemäßen Strömungsmaschine sind die Einsetzeinrichtungen über einen aus den Vorsprüngen und Nuten gebildeten Steckmechanismus auf einfache und schnelle Weise im Bereich der Ausnehmungen in Wirkverbindung mit der Wandung bringbar. Weiterhin können durch den erfindungsgemäßen Verbindungsmechanismus im Betrieb der Strömungsmaschine wirkende Kräfte durch die Einsetzeinrichtungen geleitet werden, so dass die Einsetzeinrichtungen in den Kraftfluss der Wandung eingebunden sind. Die Verbindungsrichtungen sind hierzu insbesondere zueinander im Wesentlichen komplementär ausgeführt. Da die im Betrieb der Strömungsmaschine im Bereich der Wandung wirkenden Lasten somit durch die Einsetzeinrichtungen übertragen werden, können die Ausnehmungen und die Einsetzeinrichtungen vorteilhafterweise groß ausgeführt werden, so dass eine Zugänglichkeit durch die Ausnehmungen verbessert ist.

Zudem ist bei einem Zusammenwirken der Verbindungseinrichtungen der Einsetzeinrichtungen mit den Verbindungseinrichtungen der Wandung durch die miteinander zusammenwirkenden Vorsprünge und Nuten ein gute Abdichtung zwischen den Einsetzeinrichtungen und der Wandung geschaffen, so dass im Betrieb der Strömungsmaschine ein Luftdurchtritt besonders sicher verhindert ist. Über das Zusammenwirken der Verbindungseinrichtungen ist zudem auf konstruktiv einfache Weise eine eine große Feuer- bzw. Flammfestigkeit aufweisende Verbindung zwischen den Einsetzeinrichtungen und der Wandung geschaffen.

Die Vorkragungen der Wandung erstrecken sich dabei jeweils ausgehend von einem stegförmigen Bereich der Wandung im Wesentlichen in entgegengesetzter Richtung zu einer Erstreckungsrichtung der Vorkragungen der Einsetzeinrichtungen ausgehend von stegförmigen Bereichen der Einsetzeinrichtungen. Die Nuten und die Vorkragungen der Einsetzeinrichtungen und der Wandung sind jeweils insbesondere in der Wandung zugewandten Randbereichen der Einsetzeinrichtungen bzw. in den Einsetzeinrichtungen zugewandten Randbereichen der Wandung angeordnet, so dass die Verbindungseinrichtungen der Einsetzeinrichtungen jeweils einen seitlichen Abschluss der Einsetzeinrichtungen und die Verbindungseinrichtungen der Wandung jeweils einen seitlichen Abschluss der Wandung bilden. Die Nuten und die Vorkragungen der Einsetzeinrichtungen sowie der Wandung erstrecken sich insbesondere im Wesentlichen entlang der Randbereiche der Einsetzeinrichtungen bzw. der Randbereiche der Wandung.

Dadurch, dass die Wandung und die Einsetzeinrichtungen jeweils mehrere Vorkragungen und Nuten aufweisen, die insbesondere jeweils entlang eines Randbereichs der Wandung bzw. der Einsetzeinrichtungen verlaufen und vorzugsweise ausgehend von Randbereichen der Einsetzeinrichtungen bzw. der Wandung in Richtung von mittleren Bereichen der Einsetzeinrichtungen bzw. in hierzu entgegengesetzter Richtung abwechselnd aneinander angrenzend angeordnet sind, ist eine Haltekraft und Dichtwirkung zwischen den Einsetzeinrichtungen und der Wandung bei der erfindungsgemäßen Lösung vorteilhaft groß.

Bei einer einen vorteilhafterweise geringen Bauraum benötigenden Ausführung der erfindungsgemäßen Strömungsmaschine weisen die Vorkragungen der Einsetzeinrichtungen bzw. der Wandung jeweils eine Oberfläche auf, die auch jeweils eine Oberfläche der Nuten der Einsetzeinrichtungen bzw. der Wandung ist.

Die Einsetzeinrichtungen können bei einer vorteilhaften Ausführung der Erfindung auf einfache Weise in Eingriff mit der Wandung gebracht werden, wenn die Vorkragungen der Einsetzeinrichtungen und die Vorkragungen der Wandung derart ausgeführt sind, dass die Einsetzeinrichtungen in einer translatorischen Bewegung in Eingriff mit der Wandung bringbar sind.

Wenn die Vorkragungen und/oder die Nuten der Einsetzeinrichtungen und/oder der Wandung umlaufend zu der Wandung zugewandten Randbereichen der Einsetzeinrichtungen bzw. umlaufend zu den Einsetzeinrichtungen zugewandten Randbereichen der Wandung ausgeführt sind, ist jeweils eine hinsichtlich der Dichtheit und der Kraftübertragung günstige Ausführung geschaffen, die zudem besonders einfach montierbar ist. Alternativ hierzu können die Verbindungseinrichtungen der Einsetzeinrichtungen und/oder die Verbindungseinrichtungen der Wandung auch einen oder mehrere Bereiche aufweisen, die die jeweiligen Randbereiche nur teilweise umlaufen.

Um die Einsetzeinrichtungen in montierter Position sicher an der Wandung zu halten, können die Einsetzeinrichtungen jeweils über wenigstens ein Befestigungsmittel in montierter Position der Einsetzeinrichtungen im Bereich der Ausnehmungen an der Wandung gehalten sein. Da durch das Zusammenwirken der Verbindungseinrichtungen bereits Kräfte zwischen den Einsetzeinrichtungen und der Wandung übertragen werden, ist die Anzahl der zur Erzielung einer stabilen und dichten Verbindung erforderlichen Befestigungsmittel gegenüber den aus der Praxis bekannten Ausführungen allerdings vorteilhafterweise reduziert. Die beispielsweise als Schrauben ausgeführten Befestigungsmittel wirken beispielsweise jeweils mit einem Muttergewinde zusammen, das vorzugsweise im Wesentlichen jeweils bündig zu in montierter Position der Einsetzeinrichtungen in radialer Richtung nach innen gewandten Oberflächen der Einsetzeinrichtungen angeordnet ist.

Bei einer einfach zu montierenden Ausführung der erfindungsgemäßen Strömungsmaschine weisen die Einsetzeinrichtungen an in montierter Position der Einsetzeinrichtungen radial äußeren Seiten jeweils ein griffartiges Element auf.

Bevorzugt weisen die Einsetzeinrichtungen und die Wandung einen im Querschnitt vergleichbaren und insbesondere identischen Aufbau auf und sind vorzugsweise jeweils mit einer schallabsorbierenden Mittelschicht, einer Innenschicht und einer Außenschicht ausgeführt. Sowohl die Innenschichten als auch die Außenschichten können jeweils mehrlagig ausgeführt sein, wobei die jeweiligen Lagen insbesondere mit einem Verbundwerkstoff, mit Metall, beispielsweise Aluminium, oder mit Carbon ausgeführt und beispielsweise perforiert sind. Die jeweilige Schicht kann beispielsweise als Spritzgussteil ausgeführt sein.

Bei einer vorteilhaften Ausführung der erfindungsgemäßen Strömungsmaschine sind die Verbindungseinrichtungen der Einsetzeinrichtungen und/oder die Verbindungseinrichtungen der Wandung jeweils durch die Mittellage und/oder die Außenlage und/oder die Innenlage der Wandung bzw. der Einsetzeinrichtungen gebildet.

Wenn die Einsetzeinrichtungen in montiertem Zustand auf einer in radialer Richtung der Strömungsmaschine inneren Seite einen Strömungskanal begrenzen und die Vorkragungen der Einsetzeinrichtungen mit Stegen der Einsetzeinrichtungen verbunden sind, die in montierter Position der Einsetzeinrichtungen auf jeweils einer in radialer Richtung der Strömungsmaschine inneren Seite von Stegen der Wandung angeordnet sind, über die die Vorkragungen an die Wandung angebunden sind, werden die Einsetzeinrichtungen vorteilhafterweise über einen im Betrieb der Strömungsmaschine im Bereich des Strömungskanals wirkenden Druck jeweils in ihren mit der Wandung zusammenwirkenden Positionen gehalten. Alternativ hierzu kann es auch vorgesehen sein, dass die Stege der Einsetzeinrichtungen jeweils in montierter Position der Einsetzeinrichtungen auf einer in radialer Richtung der Strömungsmaschine äußeren Seite der Stege der Wandung angeordnet sind.

Bei einer vorteilhaften Ausführung einer erfindungsgemäßen Strömungsmaschine ist es vorgesehen, dass die Rahmenstruktur der Wandung einen axialen Bereich der Strömungsmaschine in Umfangsrichtung der Strömungsmaschine vollständig umgibt und vorzugsweise in sämtlichen von der Rahmenstruktur gebildeten Ausnehmungen unabhängig voneinander lösbare, vorzugsweise modular ausgeführte Einsetzeinrichtungen anordenbar sind. Durch die Einsetzeinrichtungen ist in Umfangsrichtung der Strömungsmaschine gemeinsam mit der Rahmenstruktur vorzugsweise eine geschlossene Hülle gebildet.

Eine Herstellung und Montage der Einsetzeinrichtungen ist besonders einfach und kostengünstig, wenn sämtliche Ausnehmungen der Rahmenstruktur baugleich und sämtliche Einsetzeinrichtungen zumindest hinsichtlich ihrer Form und ihrer Verbindungsbereiche baugleich ausgeführt sind. Hierdurch kann jede Einsetzeinrichtung im Bereich einer beliebigen Ausnehmung der Rahmenstruktur mit der Rahmenstruktur verbunden werden und Einsetzeinrichtungen können gegebenenfalls auf einfache Weise vertauscht werden.

Bei einer konstruktiv einfach und kostengünstig umzusetzenden Ausführung der erfindungsgemäßen Strömungsmaschine weist die Rahmenstruktur zwei in Längsrichtung der Strömungsmaschine zueinander beabstandete ringförmige Rahmenelemente auf, wobei jeweils ein Eckpunkt einer Ausnehmung einem ringförmigen Rahmenelement der Rahmenstruktur und zwei Eckpunkte der Ausnehmung dem anderen ringförmigen Rahmenelement der Rahmenstruktur zugeordnet sind.

Hinsichtlich der Führung von im Betrieb der Strömungsmaschine wirkenden Kräften durch die Einsetzeinrichtungen ist es vorteilhaft, wenn die zwei einem ringförmigen Rahmenelement der Rahmenstruktur zugeordneten Eckpunkte einer Ausnehmung spiegelsymmetrisch zu einer durch den dem anderen ringförmigen Rahmenelement der Rahmenstruktur zugeordneten Eckpunkt in Längsrichtung der Strömungsmaschine verlaufenden Gerade angeordnet sind, wobei die Ausnehmungen vorzugsweise gleichschenklige Dreiecke ausbilden.

Wenn wenigstens ein weiteres drittes, auf einer dem ersten ringförmigen Rahmenelement abgewandten Seite des zweiten ringförmigen Rahmenelements angeordnetes ringförmiges Rahmenelement der Rahmenstruktur vorgesehen ist, wobei umfangsseitig durch die Rahmenstruktur zwischen dem zweiten ringförmigen Rahmenelement und dem dritten ringförmigen Rahmenelement mehrere, insbesondere dreieckig ausgeführte Ausnehmungen gebildet sind, kann die Rahmenstruktur auf einfache und stabile Weise eine große Erstreckung in Längsrichtung der Strömungsmaschine aufweisen.

Bei einer vorteilhaften Ausführung der erfindungsgemäßen Strömungsmaschine ist eine Halteeinrichtung zur externen Anbindung der Strömungsmaschine im Bereich eines ringförmigen Rahmenelements der Rahmenstruktur angeordnet. Hierbei können im Betrieb der Strömungsmaschine auftretende Kräfte in vorteilhafterweise über die Halteeinrichtung übertragen werden.

Wenn die Halteeinrichtung in einem Bereich des zweiten ringförmigen Rahmenelements angeordnet ist, dem mehrere, insbesondere sechs Eckpunkte von verschiedenen Ausnehmungen der Rahmenstruktur zugeordnet sind, ist eine Halterung der Strömungsmaschine in einem beispielsweise in Längsrichtung der Strömungsmaschine mittleren Bereich der Rahmenstruktur möglich. Das Vorsehen der Rahmenstruktur mit mehreren ringförmigen Rahmenelementen ermöglicht somit eine flexible Anordnung der Halteeinrichtung in Längsrichtung der Strömungsmaschine.

Bei einer vorteilhaften Ausführung der erfindungsgemäßen Strömungsmaschine umfasst bzw. umgreift die die Rahmenstruktur und die Einsetzeinrichtungen aufweisende Wandung einen Strömungskanal, insbesondere einen Nebenstromkanal oder einen Kernstromkanal einer insbesondere als Strahltriebwerk ausgeführten Strömungsmaschine, umlaufend. Begrenzt die Wandung den Nebenstromkanal in radialer Richtung nach außen, kann durch eine Entfernung der jeweiligen Einsetz-15827 Blankenfelde-Mahlow(DE)
einrichtung durch die dadurch freigegebene Ausnehmung auf einfache Weise beispielsweise für Wartungsarbeiten ein Zugang zu einem gewünschten Bereich des Kerntriebwerk ermöglicht werden.

Wenn wenigstens eine Einsetzeinrichtung mit wenigstens einer Baueinheit vormontierbar ist, können die Einsetzeinrichtungen auf einfache Weise mit den jeweiligen Baueinheiten bereitgestellt werden, so dass die Einsetzeinrichtungen gemeinsam mit der jeweiligen Baueinheit in einem Montageschritt an der Rahmenstruktur montiert werden können. Hierdurch können zusätzliche Baueinheiten ohne aufwändige Modifikation der Rahmenstruktur auf einfache Weise an der Rahmenstruktur angeordnet werden. Die Baueinheit kann beispielsweise ein Oberflächenkühler sein, wobei die Baueinheit vorzugsweise an einer in montiertem Zustand der Einsetzeinrichtung einem Strömungskanal abgewandten Seite der Einsetzeinrichtung angeordnet ist.

Bei einer vorteilhaften Ausführung der Erfindung können die Einsetzeinrichtungen vorteilhafterweise ohne Befestigungseinrichtungen für an der Wandung anzubringende Baueinheiten ausgeführt sein, wenn die Rahmenstruktur Anbindungsstellen zur Anbindung der Baueinheiten aufweist.

Weitere Vorteile und vorteilhafte Ausführungsformen einer erfindungsgemäßen Strömungsmaschine ergeben sich aus den Patentansprüchen und den nachfolgend unter Bezugnahme auf die in der Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
Fig. 1 eine stark schematisierte Längsschnittansicht eines Strahltriebwerks mit einem Nebenstromkanal, der außenseitig von einer Wandung begrenzt ist;
Fig. 2 eine vereinfachte Ansicht eines Teils des Strahltriebwerks gemäß Fig. 1, wobei eine Rahmenstruktur der Wandung näher ersichtlich ist;
Fig. 3 eine vereinfachte, dreidimensionale Darstellung eines Ausschnitts des Strahltriebwerks gemäß Fig. 2, wobei in von der Rahmenstruktur gebildeten Ausnehmungen jeweils plattenförmige Einsetzeinrichtungen eingesetzt sind und wobei eine Halteeinrichtung zur Anbindung des Strahltriebwerks an einem Flugzeug an einem stromabseitigen, ringförmigen Rahmenelement der Rahmenstruktur angeordnet ist;
Fig. 4 eine im Wesentlichen der Fig. 3 entsprechende Darstellung des Strahltriebwerks, wobei eine Halteeinrichtung zur Anbindung des Strahltriebwerks an einem Flugzeug an einem mittleren von drei ringförmigen Rahmenelementen der Rahmenstruktur angeordnet ist;
Fig. 5 - 7 vereinfachte Darstellungen eines Ausschnitts des Strahltriebwerks gemäß Fig. 1 bis Fig. 4;
Fig. 8 eine vereinfachte Darstellung einer Rahmenstruktur der Wandung des Strahltriebwerks gemäß Fig. 1 in Alleinstellung;
Fig. 9 eine schematische, dreidimensionale Ansicht mehrerer Einsetzeinrichtungen in Alleinstellung, die zum Zusammenwirken mit der Rahmenstruktur gemäß Fig. 8 vorgesehen sind;
Fig. 10 - 13 vereinfachte dreidimensionale Ansichten eines Ausschnitts der Wandung des Strahltriebwerks gemäß Fig. 1, wobei eine Einsetzeinrichtung mit einer Verbindungseinrichtung ausgeführt ist, die im Bereich einer Ausnehmung der Wandung in Wirkverbindung mit einer Verbindungseinrichtung der Wandung bringbar ist;
Fig. 14 - 16 dreidimensionale Ansichten eines Ausschnitts der Wandung des Strahltriebwerks gemäß Fig. 1, wobei eine Einsetzeinrichtung mit einer weiteren Ausführungsform einer Verbindungseinrichtung gezeigt ist, die im Bereich einer Ausnehmung der Wandung in Wirkverbindung mit einer Verbindungseinrichtung der Wandung bringbar ist;
Fig. 17 eine stark vereinfachte Darstellung eines Aufbaus der Wandung und der Einsetzeinrichtung gemäß einer der Fig. 1 bis 16;
Fig. 18 eine stark vereinfachte Schnittdarstellung eines Ausschnitts der Wandung des Strahltriebwerks gemäß Fig. 1, wobei eine Einsetzeinrichtung mittels einer alternativ ausgeführten Verbindungseinrichtung mit einer Verbindungseinrichtung der Wandung in Wirkverbindung ist;
Fig. 19 u. 20 stark vereinfachte Darstellungen verschiedener Ausführungen der Verbindungseinrichtung der Einsetzeinrichtung und der Verbindungseinrichtung der Wandung gemäß Fig. 18; und
Fig. 21 eine stark vereinfachte Darstellung einer alternativ ausgeführten Wandung des Nebenstromkanals des Strahltriebwerks gemäß Fig. 1, die nicht als Teil der vorliegenden Erfindung zu betrachten ist, wobei die Wandung mit vier jeweils mit einer Einsetzeinrichtung verschließbaren Ausnehmungen ausgeführt ist.

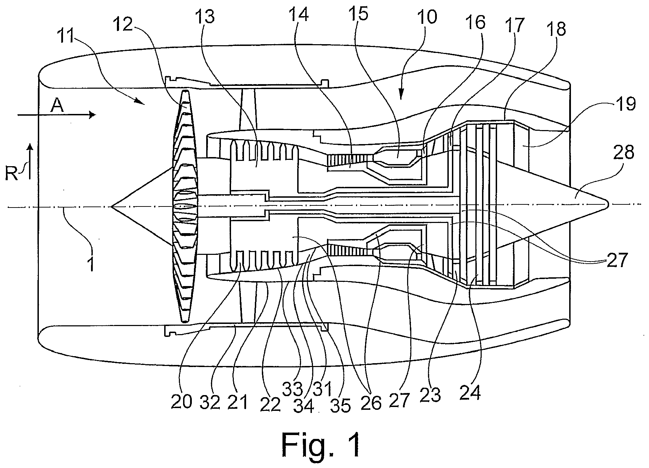

Fig. 1 zeigt eine als Strahltriebwerk 10 ausgeführte Strömungsmaschine bzw. eine Turbomaschine, bei der die Erfindung Anwendung finden kann. Aus dem Folgenden wird jedoch klar, dass die Erfindung auch bei anderen Turbomaschinen verwendet werden kann.

Das Strahltriebwerk bzw. Flugtriebwerk 10 ist in herkömmlicher Weise ausgebildet und umfasst in Strömungsrichtung A hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester, stationärer Leitschaufeln 20 aufweist, die allgemein als Statorschaufeln bezeichnet werden und die radial nach innen vom Triebwerksgehäuse 21 in einem ringförmigen Strömungskanal bzw. Kernstromkanal 31 durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassen eine Anordnung von festen Leitschaufeln 23, die radial nach innen vom Gehäuse 21 in den ringförmigen Kernstromkanal 31 durch die Turbinen 16, 17, 18 vorstehen, und eine nachfolgende Anordnung von Turbinenschaufeln 24, die nach außen von der drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1. Das Bezugszeichen 28 zeigt einen Auslasskonus.

Stromab des Fans 4 teilt sich der durch den Lufteinlass 11 dem Strahltriebwerk zugeführte Fluidstrom in einen Nebenstrom und einen Kernstrom auf, wobei der Nebenstrom durch einen zylindrisch oder konusförmig ausgeführten Nebenstromkanal 30 und der Kernstrom in den Triebwerkskern bzw. Kernstromkanal 31 strömt. Sowohl der Nebenstromkanal 30 als auch der Kernstromkanal 31 sind in Strömungsrichtung A zumindest bereichsweise in Umfangsrichtung U des Strahltriebwerks 10 bzw. Gasturbinentriebwerks an einer in radialer Richtung R des Strahltriebwerks 10 inneren Seite und einer äußeren Seite von einer Wandung 32, 33, 34, 35 begrenzt.

Im Folgenden wird näher auf die den Nebenstromkanal 30 auf der radial äußeren Seite begrenzende Wandung 32 eingegangen, wobei die Wandungen 33, 34, 35 prinzipiell vergleichbar zu der Wandung 32 ausgeführt sein können.

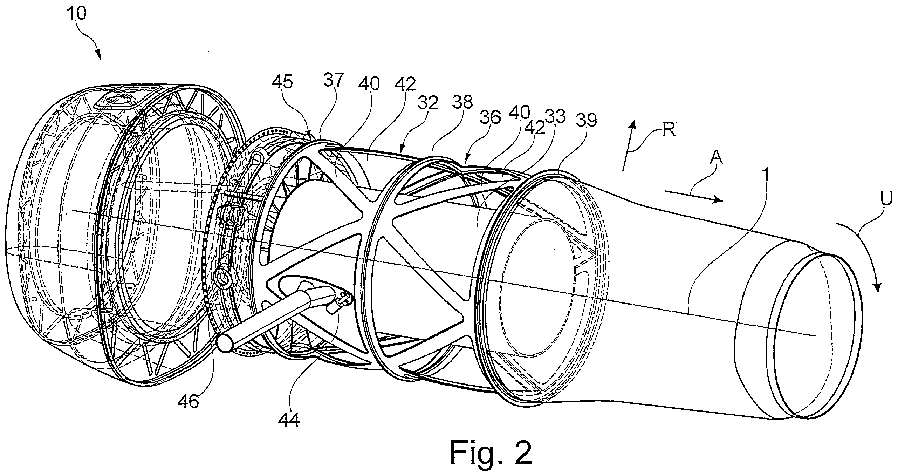

Fig. 2 bis Fig. 4 zeigen jeweils einen Ausschnitt des Strahltriebwerks 10, wobei die Wandung 32 näher ersichtlich ist. Die Wandung 32 ist hier mit einer skelettartig ausgeführten Rahmenstruktur 36 ausgeführt, die eine tragende Struktur bildet. Die Rahmenstruktur 36 weist vorliegend drei in Strömungsrichtung A zueinander beabstandet angeordnete, ringförmige Rahmenelemente 37, 38, 39 auf, wobei ein Abstand in Strömungsrichtung A zwischen dem ersten ringförmigen Rahmenelement 37 und dem zweiten ringförmigen Rahmenelement 38 vorliegend einem Abstand zwischen dem zweiten ringförmigen Rahmenelement 38 und dem dritten ringförmigen Rahmenelement 39 entspricht. Das erste ringförmige Rahmenelement 37 und das zweite ringförmige Rahmenelement 38 sowie das zweite ringförmige Rahmenelement 38 und das dritte ringförmige Rahmenelement 39 sind jeweils durch eine Vielzahl von weiteren stabförmig ausgeführten Rahmenelementen 40 miteinander verbunden.

Durch die ringförmigen Rahmenelemente 37, 38, 39 und die weiteren Rahmenelemente 40 werden vorliegend ausschließlich dreiecksförmige Ausnehmungen 42 gebildet, wobei jeweils ein erster Eckpunkt 44 der dreieckigen Ausnehmungen 42 einem ringförmigen Rahmenelement 37 bzw. 38 bzw. 39 zugeordnet und die weiteren beiden Eckpunkte 45, 46 der Ausnehmung 42 einem hierzu benachbarten ringförmigen Rahmenelement 37 bzw. 38 bzw. 39 zugeordnet sind. Bezüglich einer in Strömungsrichtung A durch den ersten Eckpunkt 44 verlaufenden Gerade sind die beiden weiteren Eckpunkte 45 und 46 vorliegend bei sämtlichen Ausnehmungen 42 spiegelsymmetrisch angeordnet, wobei die Ausnehmungen 42 vorzugsweise gleichschenklige Dreiecke bilden.

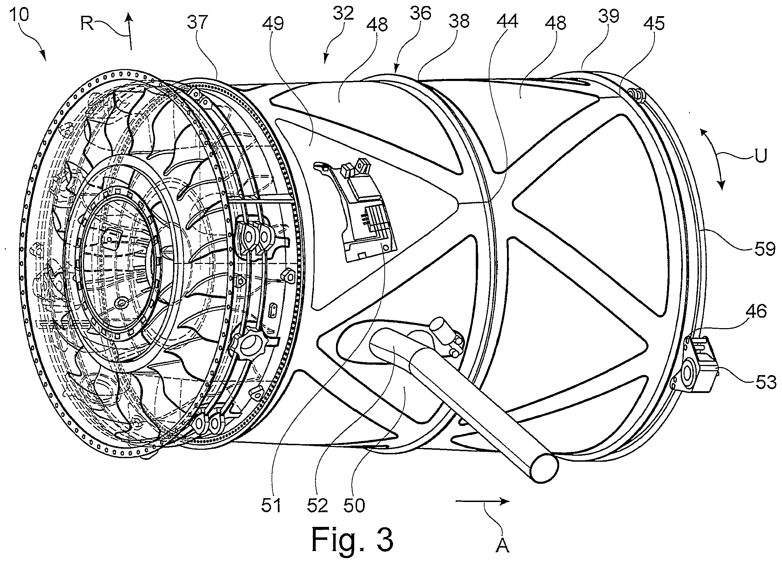

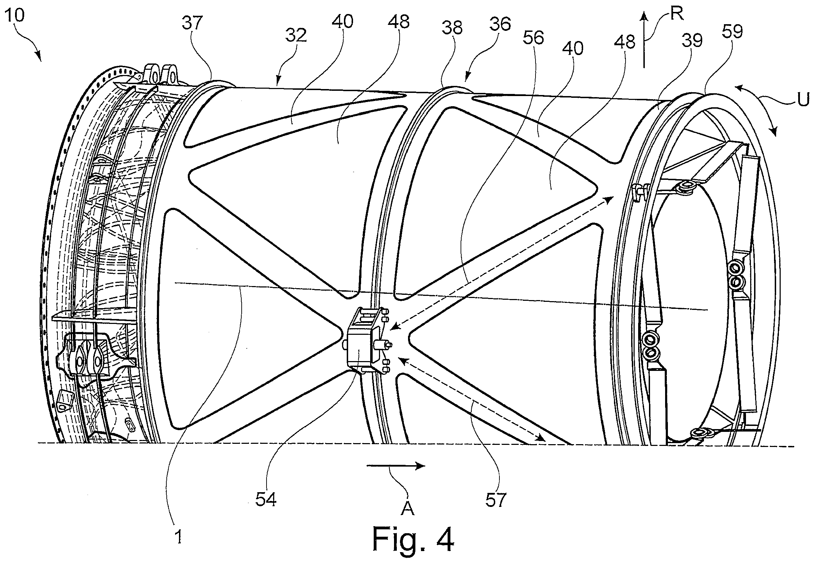

Die Wandung 32 weist weiterhin eine Vielzahl von in Fig. 3 und Fig. 4 gezeigten, vorliegend mit einer im Wesentlichen identischen Form ausgebildeten plattenförmigen Einsetzeinrichtungen 48 auf, die jeweils im Bereich einer Ausnehmung 42 lösbar in Wirkverbindung mit der Rahmenstruktur 36 bringbar sind. Durch die im Wesentlichen formgleiche Ausführung der Einsetzeinrichtungen 48 ist jede Einsetzeinrichtung 48 hier im Bereich jeder Ausnehmung 42 mit der Rahmenstruktur 36 in Wirkverbindung bringbar. Die Einsetzeinrichtungen 48 sind in Umfangsrichtung U jeweils gebogen ausgeführt.

Fig. 3 zeigt in stark schematisierter Form eine Einsetzeinrichtung 49, die auf einer dem Nebenstromkanal 30 abgewandten Seite mit einer hier als Oberflächenkühler 51 ausgeführten Baueinheit verbunden ist. Die Einsetzeinrichtung 49 kann auf einfache Weise mitsamt dem Oberflächenkühler 51 vormontiert werden und in einem Arbeitsschritt gemeinsam mit dem Oberflächenkühler 51 an der Rahmenstruktur 36 angeordnet werden.

Weiterhin ist in Fig. 3 eine im Bereich des dritten ringförmigen Rahmenelements 39 angeordnete Halteeinrichtung 53 ersichtlich, welche zur Anbindung des Strahltriebwerks 10 an einem Flugzeug vorgesehen ist. Das dritte ringförmige Rahmenelement 39 ist dabei im Wesentlichen in der gleichen Querschnittsebene des Strahltriebwerks 10 wie sogenannte A-Rahmen 59 bzw. A-Frames angeordnet.

Im Unterschied hierzu ist bei der Ausführung gemäß Fig. 4 eine Halteeinrichtung 54 zur Anbindung des Strahltriebwerks 10 an einem Flugzeug mit dem zweiten ringförmigen Rahmenelement 38 in einem Bereich verbunden, dem vorliegend sechs Eckpunkte von angrenzenden Ausnehmungen 42 zugeordnet sind. Im Betrieb des Strahltriebwerks 10 auftretende Lasten können dabei auf günstige Weise über die mit den Pfeilen 56 und 57 gekennzeichneten weiteren Rahmenelemente 40 auf die A-Rahmen bzw. A-frames 59 übertragen werden, die im Bereich des dritten ringförmigen Rahmenelements 39 angeordnet sind.

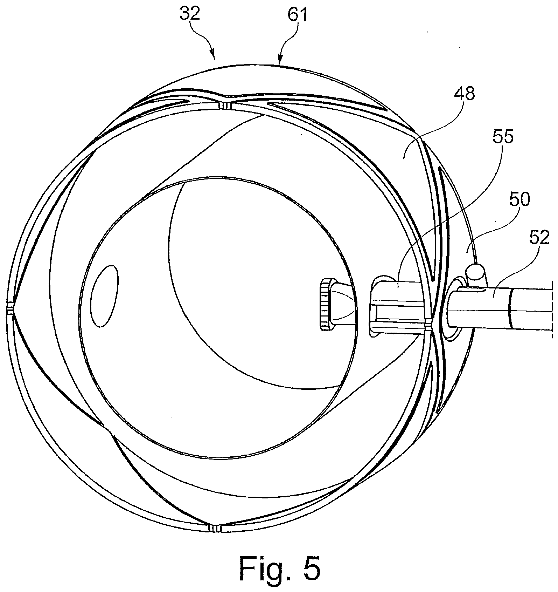

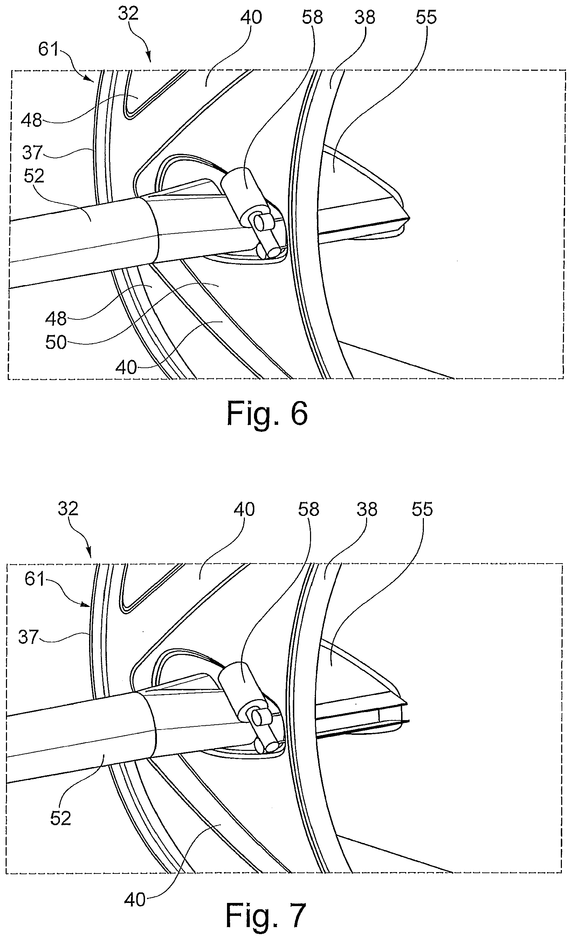

In den Fig. 5 bis Fig. 11 ist wiederum jeweils ein Teil des Strahltriebwerks 10 ersichtlich, wobei die Wandung 32 vorliegend eine mit zwei ringförmigen Rahmenelementen 37, 38 ausgeführte Rahmenstruktur 61 aufweist. Weitere Rahmenelemente 40 verbinden wiederum die ringförmigen Rahmenelemente 37, 38 derart, dass umlaufend vorliegend im Wesentlichen identisch ausgeführte, dreiecksförmige Ausnehmungen 42 gebildet werden.

Wie insbesondere den Fig. 5 bis Fig. 7 zu entnehmen ist, ist vorliegend eine Einsetzeinrichtung 50 mit einer Vorkühleinrichtung 52 gekoppelt, die auf einfache Weise beispielsweise sowohl auf einer ersten Seite des Strahltriebwerks 10 in Wirkverbindung als auch auf einer der ersten Seite gegenüberliegenden zweiten Seite des Strahltriebwerks 10 in Wirkverbindung mit der Rahmenstruktur 61 bringbar ist. Die Vorkühleinrichtung 52 kann dabei eine Klappeneinrichtung 55 aufweisen, über die aus dem Nebenstromkanal 30 im Betrieb des Strahltriebwerks 10 in gewünschtem Umfang Luft entnommen werden kann. Ein die Klappeneinrichtung 55 betätigender Aktuator 58 ist dabei vorteilhafterweise auf einer dem Nebenstromkanal 30 abgewandten Seite der Wandung 32 mit der Einsetzeinrichtung 50 anordenbar.

Neben der Ausführung der Rahmenstruktur mit zwei oder drei ringförmigen Rahmenelementen kann die Rahmenstruktur bei nicht näher gezeigten Ausführungen auch vier oder mehr ringförmige Rahmenelemente aufweisen, die insbesondere in der oben näher beschriebenen Weise mit weiteren Rahmenelementen verbunden sein können, wobei in von der Rahmenstruktur gebildeten Ausnehmungen jeweils eine Einsetzeinrichtung einsetzbar und mit der Rahmenstruktur in Wirkverbindung bringbar ist.

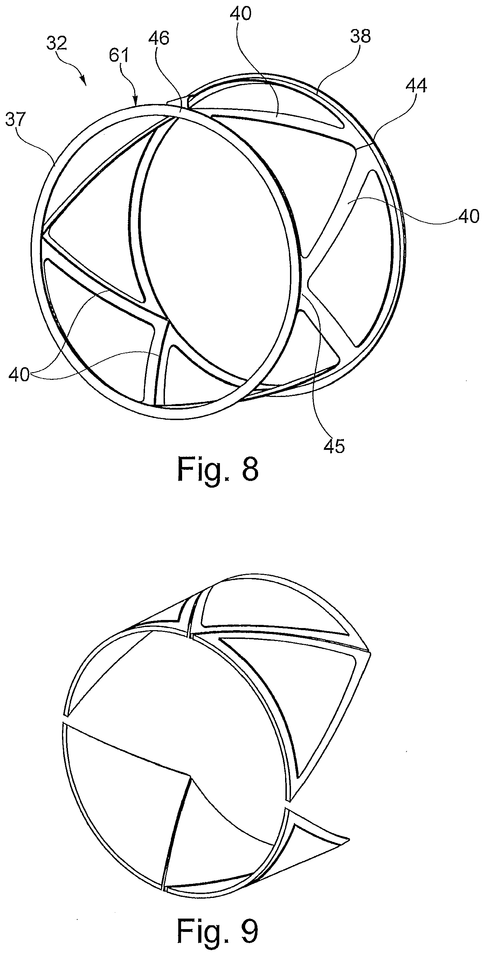

Die in Fig. 9 in Alleinstellung gezeigten Einsetzeinrichtungen 48 sind ebenso wie die Einsetzeinrichtungen 49 und 50 mit der in Fig. 8 in Alleinstellung gezeigten Rahmenstruktur 61, wie im Folgenden näher beschrieben, in Wirkverbindung bringbar. In vergleichbarer Weise sind die Einsetzeinrichtungen 48, 49, 50 auch im Bereich der Ausnehmungen 42 mit der Rahmenstruktur 36 in Wirkverbindung bringbar.

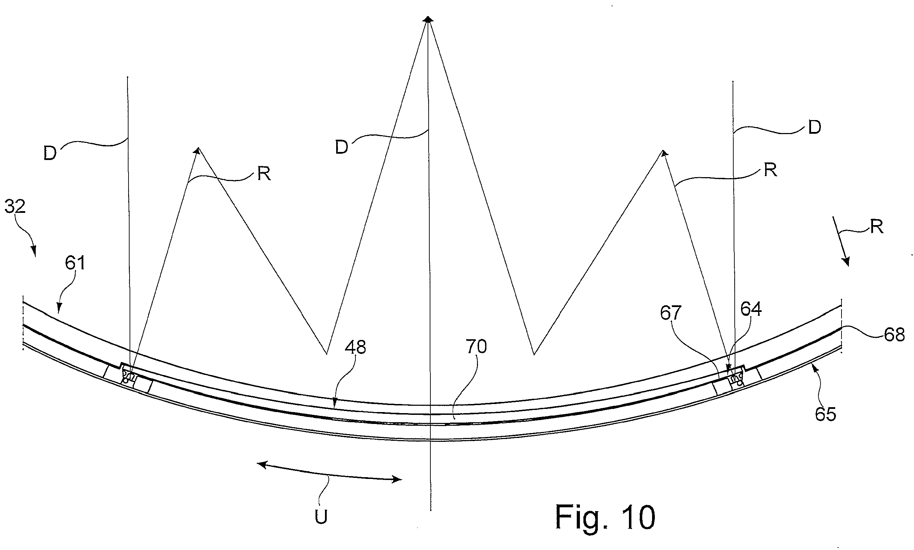

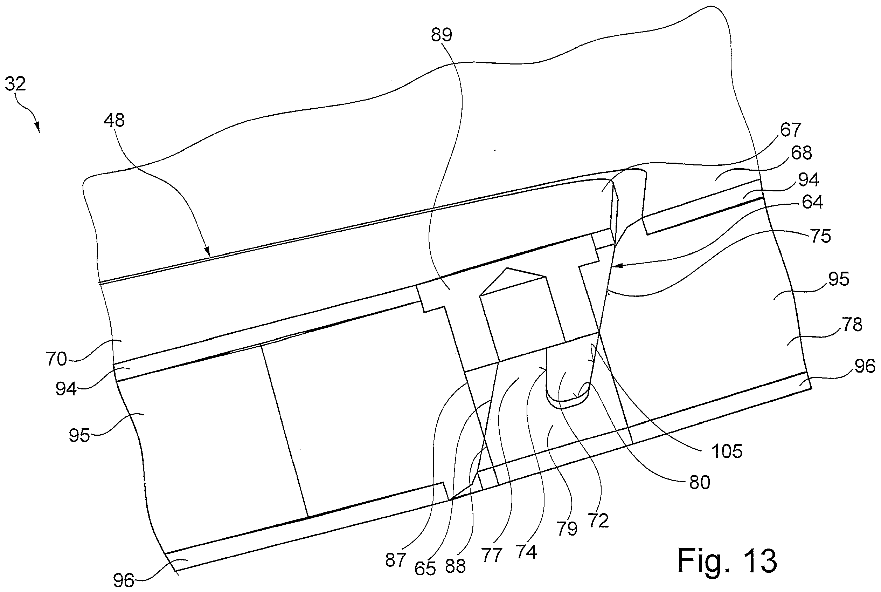

Die Einsetzeinrichtung 48 weist eine in Fig. 10 bis Fig. 13 näher ersichtliche Verbindungseinrichtung 64 auf, die hier im Bereich eines der Rahmenstruktur 61 zugewandten Randbereichs 67 der Einsetzeinrichtung 48 die Einsetzeinrichtung vollständig umlaufend ausgeführt ist. Die Rahmenstruktur 61 ist mit einer Verbindungseinrichtung 65 ausgebildet, die in einem der Einsetzeinrichtung 48 zugewandten Randbereich 68 der Rahmenelemente 37 bis 40 der Rahmenstruktur 61 angeordnet ist, wobei die Verbindungseinrichtung 65 der Rahmenstruktur 61 vorliegend den Randbereich 68 vollständig umlaufend ausgeführt ist.

Die Verbindungseinrichtung 64 weist ausgehend von einem zentralen mittleren Bereich 70 der Einsetzeinrichtung 48 einen in montierter Position der Einsetzeinrichtung 48 in einem dem Nebenstromkanal 30 zugewandten Bereich angeordneten Steg 71 auf, der auf einer dem mittleren Bereich 70 abgewandten Seite mit einer sich in radialer Richtung R im Wesentlichen nach außen erstreckenden, im Wesentlichen V- bzw. U-förmigen Vorkragung 72 bzw. einem Vorsprung ausgeführt ist. Durch die Vorkragung 72, den Steg 71 und den mittleren Bereich 70 wird eine V- bzw. U-förmige, in radialer Richtung R im Wesentlichen nach außen geöffnete Nut 73 gebildet, wobei eine dem mittleren Bereich 70 zugewandte, im gezeigten Querschnitt in radialer Richtung R im Wesentlichen geradlinige Oberfläche 74 sowohl Teil der Vorkragung 72 als auch Teil der Nut 73 ist.

Die Verbindungseinrichtung 65 der Rahmenstruktur 61 ist im Querschnitt im Wesentlichen spiegelsymmetrisch zu der Verbindungseinrichtung 64 der Einsetzeinrichtung 48 ausgeführt und weist ebenfalls eine Vorkragung 77 bzw. einen Vorsprung auf, die bzw. der über einen Steg 79 mit einem zentralen Bereich 78 hier des Rahmenelements 40 verbunden ist, so dass die Vorkragung 77 auf einer dem zentralen Bereich 78 abgewandten Seite des Stegs 79 mit dem Steg 79 verbunden ist. Der Steg 79 wiederum ist in montierter Position der Einsetzeinrichtung 48 in einem dem Nebenstromkanal 30 abgewandten Bereich des Rahmenelements 40 angeordnet. Die Vorkragung 77 erstreckt sich dabei ausgehend von dem Steg 79 in radialer Richtung R im Wesentlichen nach innen und ist im Wesentlichen V- bzw. U-förmig ausgeführt. Durch die Vorkragung 77, den Steg 79 und den zentralen Bereich 78 des Rahmenelements 37 bis 40 wird eine V- bzw. U-förmige Nut 80 gebildet, die im Wesentlichen in radialer Richtung R nach innen geöffnet ist. Eine dem zentralen Bereich 78 zugewandte, im gezeigten Querschnitt in radialer Richtung R im Wesentlichen geradlinige Oberfläche 81 ist dabei sowohl Teil der Vorkragung 77 als auch Teil der Nut 80.

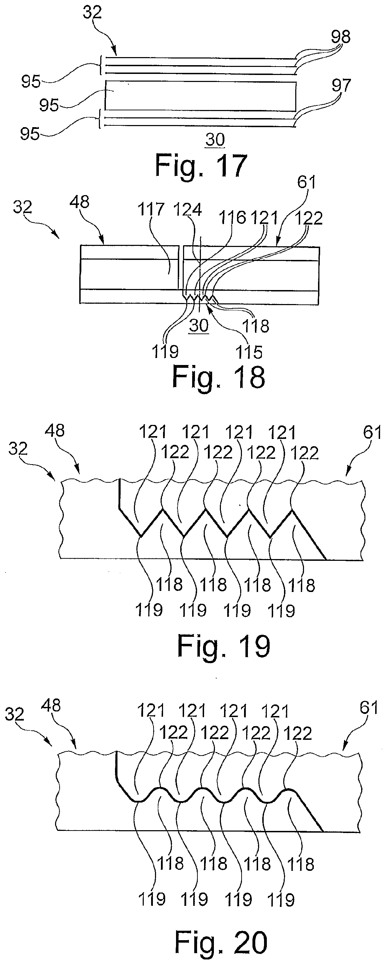

Die Einsetzeinrichtung 48 und die Rahmenelemente 37, 38, 39, 40 der Rahmenstruktur 61 weisen vorliegend einen im Wesentlichen vergleichbaren Aufbau auf und sind mit einer Innenschicht 94, einer Mittel- bzw. Zwischenschicht 95 und einer Außenschicht 96 ausgeführt. Die Innenschicht 94 und die Außenschicht 96 sind dabei hier mit einem metallischen Werkstoff ausgebildet, wohingegen die Mittelschicht 95 mit einem schallabsorbierenden Material ausgeführt ist. Wie in Fig. 17 stark schematisiert näher ersichtlich ist, können die Innenschicht 94 und die Außenschicht 96 dabei mehrere, beispielsweise perforierte Lagen 97 bzw. 98 aufweisen. Der Aufbau der Einsetzeinrichtung 48 und der Rahmenstruktur 61 ist dabei derart gewählt, dass die Einsetzeinrichtungen 48 und die Rahmenstruktur 61 im Betrieb des Strahltriebwerks 10 auftretenden Lasten sicher standhalten können und eine dem Nebenstromkanal 30 abgewandte Seite der Wandung 32 gegen einen potentiellen Feuerdurchtritt gesichert und in gewünschtem Umfang luftdicht von dem Nebenstromkanal 30 getrennt ist.

Bei der in den Fig. 10 bis Fig. 13 gezeigten Ausführungsform der Einsetzeinrichtung 48 und des Rahmenelements 40 der Rahmenstruktur 61 sind die Nuten 73 bzw. 80 und Vorkragungen 72 bzw. 77 der Einsetzeinrichtung 48 und des Rahmenelements 40 ausschließlich Bestandteil der Mittelschicht 95.

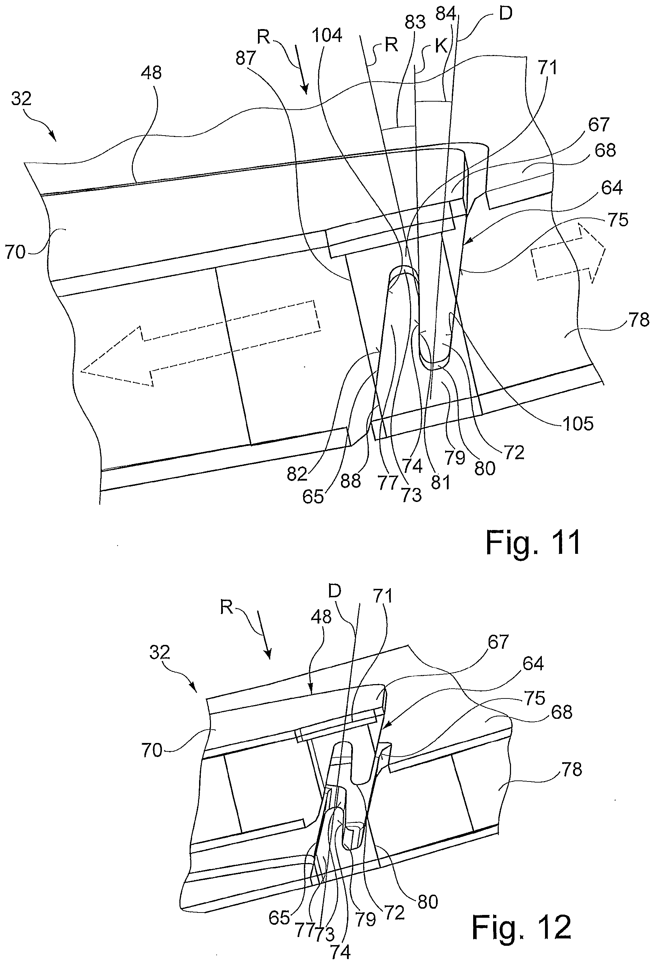

In montiertem Zustand der Einsetzeinrichtung 48 wirken die Einsetzeinrichtung 48 und die Rahmenstruktur 61 insbesondere über die Oberflächen 74 und 81 miteinander zusammen, wobei die Oberflächen 74 und 81 hierbei im Querschnitt gemäß Fig. 11 entlang einer Kontaktlinie K miteinander zusammenwirken. Zudem liegt die Vorkragung 72 mit einer dem zentralen Bereich 78 der Rahmenstruktur 61 zugewandten Oberfläche 75 in montiertem Zustand der Einsetzeinrichtung 48 an einer Oberfläche 105 der Nut 80 der Rahmenstruktur 61 an, die auf einer dem zentralen Bereich 78 der Rahmenstruktur 61 zugewandten Seite der Oberfläche 74 angeordnet ist. In vergleichbarer Weise liegt die Vorkragung 77 der Rahmenstruktur 61 bei montierter Einsetzeinrichtung 48 auch mit einer Oberfläche 82, die auf einer dem mittleren Bereich 70 der Einsetzeinrichtung 48 zugewandten Seite der Oberfläche 81 angeordnet ist, an einer Oberfläche 104 der Nut 73 der Einsetzeinrichtung 48 an, wobei ein Kopfbereich der Vorkragungen 72 bzw. 77 von einem Nutgrund der Nut 80 bzw. der Nut 73 jeweils beabstandet ist.

Die im Querschnitt durch eine im Wesentlichen plane Linie gebildeten Oberflächen 74 und 81 sind insgesamt vorzugsweise konusförmig ausgeführt, wobei die Kontaktlinie K, die durch einen senkrecht zu einer Flächennormale der Oberflächen 74 und 81 angeordneten Flächenvektor definiert ist, vorliegend mit der radialen Richtung R im Bereich der Kontaktlinie K einen Winkel 83 einschließt. Der Winkel 83 ist insbesondere entlang des gesamten Randbereichs 67 der Einsetzeinrichtung 48 vorzugsweise konstant. Ein in radialer Richtung R äußerer Bereich der Oberflächen 74 und 81 erstreckt sich dabei weiter in Richtung des mittleren Bereichs 70 der Einsetzeinrichtung 48 als ein in radialer Richtung R innerer Bereich der Oberflächen 74 und 81. Hierdurch wird in montierter Position der Einsetzeinrichtung 48 durch im Betrieb des Strahltriebwerks 10 auf die Einsetzeinrichtung 48 und die Rahmenstruktur 61 wirkende Kräfte eine im Wesentlichen in Richtung des mittleren Bereichs 70 der Einsetzeinrichtung 48 wirkende Kraft auf die Einsetzeinrichtung 48 und eine hierzu im Wesentlichen entgegengerichtete Kraft in die Rahmenstruktur 61 induziert, so dass die Einsetzeinrichtung 48 sicher an der Rahmenstruktur 61 gehalten ist. Neben der verbesserten Halterung der Einsetzeinrichtung 48 an der Rahmenstruktur 61, die eine verbesserte Kraftübertragung zwischen der Rahmenstruktur 61 und der Einsetzeinrichtung 48 zur Folge hat, wird hierdurch auch eine Dichtwirkung zwischen der Einsetzeinrichtung 48 und der Rahmenstruktur 61 verbessert.

Die in Umfangsrichtung U im Wesentlichen konzentrisch zu der Triebwerksachse 1 ausgeführte Einsetzeinrichtung 48 ist, wie in den Fig. 10 bis Fig. 13 mit dem Bezugszeichen D gezeigt, in einer translatorischen Montagebewegung ausgehend von der in Fig. 12 ersichtlichen Position von einer in radialer Richtung R inneren Seite der Rahmenstruktur 61 in die in den Fig. 10, Fig. 11 und Fig. 13 gezeigte, mit den Rahmenelementen 37 bis 40 verbundene Position bringbar. Die Montagerichtung bzw. Demontagerichtung D erstreckt sich dabei in der Querschnittsansicht gemäß Fig. 11 und Fig. 12 im Wesentlichen in Richtung einer Winkelhalbierenden der Flächen 81 und 105 und der Flächen 74 und 104, die vorliegend im Wesentlichen parallel zueinander angeordnet sind. Zwischen der Montagerichtung D und der Kontaktlinie K liegt dabei ein Winkel 84 von größer 0°, vorliegend von etwa 3°, vor, der als Formschräge bezeichnet wird. Der Winkel 84 ist einerseits aus Herstellungsgesichtspunkten und andererseits vorgesehen, um eine Blockierung der Teile während einer Demontage der Einsetzeinrichtung 48 auf einfache Weise zu verhindern.

Die Winkelhalbierenden der Flächen 81 und 105 bzw. der Flächen 74 und 104 sind in jedem Umfangsbereich der Einsetzeinrichtung 48 im Wesentlichen in Montage- bzw. Demontagerichtung D orientiert, um sowohl eine Montage als auch eine Demontage der Einsetzeinrichtung 48 einfach durchführen zu können.

Um eine Montage bzw. Demontage der Einsetzeinrichtung 48 zu erleichtern, kann hierzu ein nicht näher gezeigtes Griffelement auf einer dem Nebenstromkanal 30 abgewandten Seite der Einsetzeinrichtung 48 angeordnet sein.

Im Betrieb des Strahltriebwerks 10 liegt auf einer dem Nebenstromkanal 30 zugewandten Seite der Wandung 32 ein größerer Druck als auf einer dem Nebenstromkanal 30 abgewandten Seite der Wandung 32 an. Hierdurch wird auf die Wandung 32 eine im Wesentlichen in radialer Richtung R nach außen wirkende Kraft ausgeübt. Durch die winklige Anordnung der Oberflächen 74 und 81 gegenüber der radialen Richtung R werden diese Kräfte in eine in Umfangsrichtung U wirkende Kraft umgesetzt, die die Einsetzeinrichtung 48 an der Rahmenstruktur 61 hält. Weiterhin werden die Einsetzeinrichtung 48 und die Rahmenstruktur 61 im Betrieb des Strahltriebwerks 10 aufgrund von großen Drehzahlen aufgeweitet. Durch diese Effekte werden über die Oberfläche 74 der Vorkragung 72 der Einsetzeinrichtung 48 und die Oberfläche 81 der Vorkragung 77 der Rahmenstruktur 61 Kräfte in die Einsetzeinrichtung 48 und die Rahmenstruktur 61 übertragen, die die Einsetzeinrichtung 48 in Richtung ihres mittleren Bereichs 70 bzw. die Rahmenstruktur 61 in Richtung ihres zentralen Bereichs 78 ziehen und die Einsetzeinrichtung 48 in ihrer an der Rahmenstruktur 61 angeordneten Position halten.

Um die Einsetzeinrichtung 48 insbesondere auch dann sicher in ihrer an der Rahmenstruktur 61 angeordneten Position zu halten, wenn im Bereich des Nebenstromkanals 30 lediglich ein geringer Druck wirkt, ist die Einsetzeinrichtung 48 mit beispielsweise als Schrauben 85 ausgeführten Befestigungsmitteln in der montierten Position gesichert. Hierzu sind im Wesentlichen in radialer Richtung R verlaufende Bohrungen 87, 88 in dem Randbereich 67 der Einsetzeinrichtung 48 und in dem Randbereich 68 der Rahmenstruktur 61 vorgesehen, die in montiertem Zustand der Einsetzeinrichtung 48 konzentrisch und fluchtend zueinander angeordnet sind. Von einer in radialer Richtung R inneren Seite sind in die Bohrungen 87 der Einsetzeinrichtung 48 vorliegend Muttern 89 eingesetzt, die bündig zu einer in Richtung des Nebenstromkanals 30 weisenden Oberfläche der Einsetzeinrichtung 48 angeordnet sind. In radialer Richtung R von außen sind zur Festlegung der Einsetzeinrichtung 48 an der Rahmenstruktur 61 Schrauben 85 durch die Bohrungen 87 und 88 führbar und in Wirkverbindung mit den Muttern 89 bringbar.

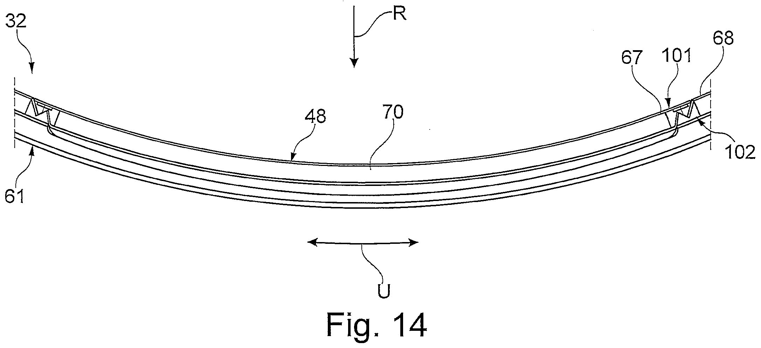

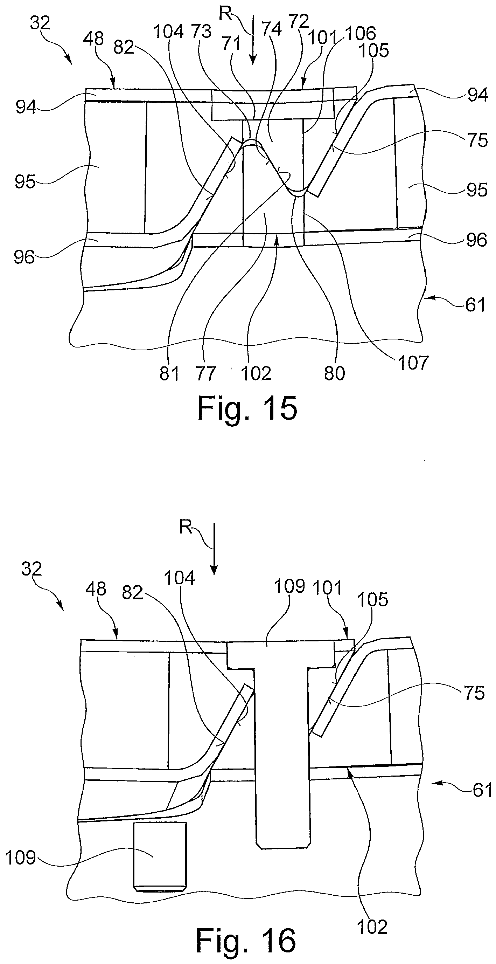

Die in Fig. 14 bis 16 gezeigte Einsetzeinrichtung 48 ist mit einer alternativ zu der Verbindungseinrichtung 64 ausgeführten Verbindungseinrichtung 101 ausgebildet. Zudem weist die Rahmenstruktur 61 eine alternativ zu der Verbindungseinrichtung 65 ausgeführte Verbindungseinrichtung 102 auf, wobei im Folgenden lediglich auf die Unterschiede der Verbindungseinrichtungen 101 bzw. 102 zu den Verbindungseinrichtung 64 bzw. 65 eingegangen wird.

Die Verbindungseinrichtung 101 der Einsetzeinrichtung 48 unterscheidet sich von der Verbindungseinrichtung 64 der Einsetzeinrichtung 48 im Wesentlichen dadurch, dass die Nut 73 und die Vorkragung 72 eine wellenförmige Oberfläche bilden und sich die Oberfläche 74 mit einem in radialer Richtung R äußeren Bereich weiter in Richtung des zentralen Bereichs 78 der Rahmenstruktur 61 erstreckt als mit einem in radialer Richtung R inneren Bereich. Weiterhin wird die dem mittleren Bereich 70 der Einsetzeinrichtung 48 zugewandte Oberfläche 104 der Nut 73 durch die Außenschicht 96 gebildet, die in dem Randbereich 67 in montierter Position der Einsetzeinrichtung 48 in radialer Richtung R schräg nach innen verläuft.

Die Verbindungseinrichtung 102 der Rahmenstruktur 61 ist im Querschnitt im Wesentlichen spiegelsymmetrisch bzw. komplementär zu der Verbindungseinrichtung 101 der Einsetzeinrichtung 48 ausgeführt. Die Vorkragung 77 und die Nut 80 sind entsprechend ebenfalls mit einer wellenförmigen Oberfläche ausgeführt. Weiterhin erstreckt sich die Oberfläche 81 mit einem in radialer Richtung R äußeren Bereich weiter in Richtung des mittleren Bereichs 70 der Rahmenstruktur 61 als mit einem in radialer Richtung R inneren Bereich. Zudem wird die dem zentralen Bereich 78 der Rahmenstruktur 61 zugewandte Oberfläche 105 der Nut 80 durch die Innenschicht 96 der Rahmenstruktur 61 gebildet, die in dem Randbereich 68 in radialer Richtung R schräg nach außen verläuft.

Sowohl im Bereich der Verriegelungseinrichtung 101 als auch im Bereich der Verriegelungsgegeneinrichtung 102 sind bezüglich der jeweiligen Randbereiche 67, 68 umfangsseitig verteilt Bohrungen 106, 107 vorgesehen, die in montiertem Zustand der Einsetzeinrichtung 48 fluchtend und konzentrisch zueinander angeordnet sind, wobei die Einsetzeinrichtung 48 und die Rahmenstruktur 61 über ein als Schraube 109 ausgeführtes Befestigungsmittel lösbar miteinander verbindbar sind.

Fig. 18 bis Fig. 20 zeigen in stark schematisierter Darstellung eine weitere alternativ ausgeführte Verbindungseinrichtung 115 der Einsetzeinrichtung und eine alternativ ausgeführte Verbindungseinrichtung 116 der Rahmenstruktur 61. Sowohl die Verbindungseinrichtung 115 als auch die Verbindungseinrichtung 116 sind hierbei ausschließlich von der Innenschicht 94 der Einsetzeinrichtung 46 bzw. der Rahmenstruktur 61 gebildet. Die Verbindungseinrichtung 115 der Einsetzeinrichtung 48 erstreckt sich ausgehend von einem mit der Mittelschicht 95 der Einsetzeinrichtung 46 an die Mittelschicht 95 der Rahmenstruktur 61 grenzenden Randbereich 117 in eine dem mittleren Bereich 70 der Einsetzeinrichtung 48 abgewandte Richtung und weist im Querschnitt mehrere, vorliegend vier nebeneinander angeordnete Vorkragungen 118 auf, die vorliegend jeweils vergleichbar zu der Vorkragung 72 ausgeführt sein können. Zwischen benachbarten Vorkragungen 118 sind jeweils Nuten 119 gebildet, die wiederum im Wesentlichen vergleichbar zu der Nut 73 ausgeführt sein können.

Die Verbindungseinrichtung 116 der Rahmenstruktur 61 ist wenigstens annähernd komplementär zu der Verbindungseinrichtung 115 ausgeführt und weist ebenfalls vier Vorkragungen 121 und vier Nuten 122 auf, die wiederum vergleichbar zu der Vorkragung 77 bzw. der Nut 80 ausgeführt sein können. Sowohl die Verbindungseinrichtung 115 als auch die Verbindungseinrichtung 116 können im Querschnitt ein in Fig. 19 stark schematisiert gezeigtes wellenförmiges Profil als auch ein in Fig. 20 stark schematisiert gezeigtes zackenförmiges Profil aufweisen.

Bei montierter Einsetzeinrichtung 48 ist durch ein Zusammenwirken der Verbindungseinrichtungen 115 und 116 ein Reibwert zwischen der Einsetzeinrichtung 48 und der Rahmenstruktur 61 vorteilhafterweise groß, so dass eine Abdichtungwirkung im Betrieb des Strahltriebwerks 10 zwischen der Einsetzeinrichtung 48 und der Rahmenstruktur 61 ebenfalls hoch ist und lediglich eine geringe Anzahl von nur schematisch angedeuteten, beispielsweise als Bolzen 124 ausgeführten Befestigungsmitteln zur Verbindung der Einsetzeinrichtung 48 mit der Rahmenstruktur 61 erforderlich ist. Weiterhin wird durch die Ausbildung der Verbindungseinrichtungen 115 und 116 ausschließlich durch die Innenschicht 94 der Aufbau nicht oder nur in sehr geringem Umfang beeinträchtigt, so dass die Mittelschicht 95 eine besonders gute schallabsorbierende Wirkung aufweist.

Es kann auch vorgesehen sein, dass die Verriegelungseinrichtung als separates Bauteil ausgeführt ist und beispielsweise durch Verkleben oder ein anderes Befestigungsverfahren insbesondere mit der Mittelschicht der Rahmenstruktur verbunden ist.

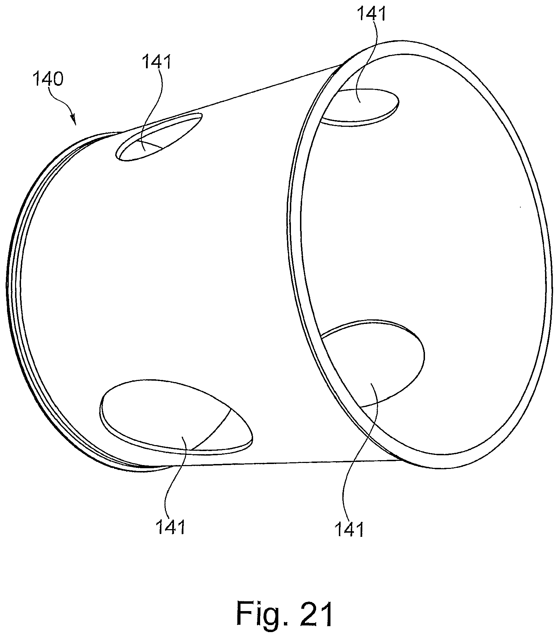

Fig. 21 zeigt eine zu der Wandung 32 alternativ ausgeführte Wandung 140 ohne eine Rahmenstruktur, die vorliegend mit vier formgleichen, oval bzw. elliptisch ausgeführten Ausnehmungen 141 ausgebildet ist. Im Bereich der Ausnehmungen 141 sind nicht näher ersichtliche Einsetzeinrichtungen einsetzbar, wobei die Einsetzeinrichtungen in oben näher beschriebener Weise in Wirkverbindung mit der Wandung bringbar sind.

### Bezugszeichenliste

- 1: Triebwerksachse
- 10: Strömungsmaschine; Strahltriebwerk
- 11: Lufteinlass
- 12: Fan
- 13: Zwischendruckkompressor
- 14: Hochdruckkompressor
- 15: Brennkammer
- 16: Hochdruckturbine
- 17: Zwischendruckturbine
- 18: Niederdruckturbine
- 19: Abgasdüse
- 20: Leitschaufel
- 21: Triebwerksgehäuse
- 22: Kompressorlaufschaufel
- 23: Leitschaufel
- 24: Turbinenschaufel
- 26: Scheibe
- 27: Nabe
- 28: Auslasskonus
- 30: Nebenstromkanal
- 31: Triebwerkskern
- 32 bis 35: Wandung
- 36: Rahmenstruktur
- 37 bis 39: ringförmiges Rahmenelement
- 40: weiteres Rahmenelement
- 44: erster Eckpunkt
- 45: zweiter Eckpunkt
- 46: dritter Eckpunkt
- 48 bis 50: Einsetzeinrichtung
- 51: Baueinheit
- 52: Vorkühleinrichtung
- 53, 54: Halteeinrichtung
- 55: Klappeneinrichtung
- 56, 57: Pfeil
- 58: Aktuator
- 59: A-Rahmen
- 61: Rahmenstruktur
- 64: Verbindungseinrichtung
- 65: Verbindungseinrichtung
- 67: Randbereich der Einsetzeinrichtung
- 68: Randbereich der Rahmenstruktur
- 70: mittlerer Bereich der Einsetzeinrichtung
- 71: Steg
- 72: Vorkragung
- 73: Nut
- 74,75: Oberfläche
- 77: Vorkragung
- 78: zentraler Bereich
- 79: Steg
- 80: Nut
- 81, 82: Oberfläche
- 83, 84: Winkel
- 85: Befestigungsmittel; Schraube
- 87,88: Bohrung
- 89: Mutter
- 94: Innenschicht
- 95: Mittelschicht
- 96: Außenschicht
- 97, 98: Lage
- 101: Verbindungseinrichtung
- 102: Verbindungseinrichtung
- 104: Oberfläche der Nut der Einsetzeinrichtung
- 105: Oberfläche der Nut der Rahmenstruktur
- 106, 107: Bohrung
- 109: Befestigungsmittel; Schraube
- 115: Verbindungseinrichtung
- 116: Verbindungseinrichtung
- 117: Randbereich der Einsetzeinrichtung
- 118: Vorkragung
- 119: Nut
- 121: Vorkragung
- 122: Nut
- 124: Befestigungsmittel; Bolzen
- 140: Wandung
- 141: Ausnehmung
- A: Strömungsrichtung
- D: Montage- bzw. Demontagerichtung
- K: Kontaktlinie
- R: radiale Richtung
- U: Umfangsrichtung

## Patentansprüche

1. Strömungsmaschine (10) mit einer sich zumindest bereichsweise umfangsseitig zu einer Zentralachse (1) der Strömungsmaschine (10) erstreckenden Wandung (32), wobei die Wandung (32) eine Rahmenstruktur (36, 61) aufweist, die mehrere Ausnehmungen (42) bildet, wobei mehrere Einsetzeinrichtungen (48, 49, 50) vorgesehen sind, die im Bereich von den in der Wandung (32, 140) angeordneten Ausnehmungen (42, 141) lösbar mit der Wandung (32, 140) verbindbar sind und die jeweils eine einer Form einer Ausnehmung (42) der Rahmenstruktur (36, 61) im Wesentlichen entsprechende Form aufweisen, **dadurch gekennzeichnet, dass** die Einsetzeinrichtungen (48, 49, 50) jeweils eine Verbindungseinrichtung (64, 101, 115) aufweisen, mittels den die Einsetzeinrichtungen (48, 49, 50) in Wirkverbindung mit Verbindungseinrichtungen (65, 102, 116) der Wandung (32, 140) bringbar sind, wobei die Verbindungseinrichtungen (64, 101, 115) der Einsetzeinrichtungen (48, 49, 50) jeweils eine sich in montiertem Zustand der Einsetzeinrichtung (48, 49, 50) zumindest bereichsweise im Wesentlichen in radialer Richtung (R) der Strömungsmaschine (10) erstreckende Vorkragung (72, 118) aufweisen, die in montiertem Zustand der Einsetzeinrichtungen (48, 49, 50) in Nuten (80, 122) der Verbindungseinrichtungen (65, 102, 116) der Wandung (32, 140) eingreifen, und die Verbindungseinrichtungen (54, 102, 116) der Wandung (32, 140) jeweils eine sich in montiertem Zustand der Einsetzeinrichtungen (48, 49, 50) zumindest bereichsweise im Wesentlichen in radialer Richtung (R) der Strömungsmaschine (10) erstreckende Vorkragung (77, 121) aufweisen, die in montiertem Zustand der Einsetzeinrichtungen (48, 49, 50) in Nuten (73, 119) der Verbindungseinrichtungen (64, 101, 115) der Einsetzeinrichtungen (48, 49, 50) eingreifen, wobei die Wandung (32, 140) und die Einsetzeinrichtungen (48, 49, 50) jeweils mehrere Vorkragungen (72, 77, 118, 121) und Nuten (73, 80, 119, 122) aufweisen, wobei die Nuten (73, 119) und die Vorkragungen (72, 118) der Einsetzeinrichtungen (48, 49, 50) und die Nuten (80, 122) und die Vorkragungen (77, 121) der Wandung (32, 140) im Querschnitt ein wellenförmiges oder ein zackenförmiges Profil bilden, wobei jede Einsetzeinrichtung (48, 49, 50) im Bereich einer Ausnehmung (42) lösbar in Wirkverbindung mit der Rahmenstruktur (36, 61) bringbar ist, und wobei die Ausnehmungen (42) der Rahmenstruktur (36, 61) und die Einsetzeinrichtungen (48, 49, 50) dreiecksförmig oder sechseckförmig und/oder achteckförmig ausgebildet sind.

2. Strömungsmaschine nach Anspruch 1, **dadurch gekennzeichnet, dass** die Vorkragungen (72, 118) der Einsetzeinrichtungen (48, 49, 50) bzw. die Vorkragungen (77, 121) der Wandung (32) jeweils eine Oberfläche (74, 81) aufweisen, die auch jeweils eine Oberfläche (74, 81) der Nuten (73, 119) der Einsetzeinrichtungen (48, 49, 50) bzw. der Nuten (80, 122) der Wandung (32, 140) ist.

3. Strömungsmaschine nach Anspruch 1 oder 2, **dadurch gekennzeichnet, dass** die Vorkragungen (72, 118) der Einsetzeinrichtungen (48, 49, 50) und die Vorkragungen (77, 121) der Wandung (32, 140) derart ausgeführt sind, dass die Einsetzeinrichtungen (48, 49, 50) in einer translatorischen Bewegung (D) in Eingriff mit der Wandung (32, 140) bringbar sind.

4. Strömungsmaschine nach einem der Ansprüche 1 bis 3, **dadurch gekennzeichnet, dass** die Vorkragungen (72, 77, 118, 121) und/oder die Nuten (73, 80, 119, 122) der Einsetzeinrichtungen (48, 49, 50) und/oder der Wandung (32, 140) umlaufend zu Randbereichen (68) der Ausnehmungen (42) an der Wandung (32, 140) bzw. umlaufend zu Randbereichen (67) der Einsetzeinrichtungen (48, 49, 50) an den Einsetzeinrichtungen (48, 49, 50) angeordnet sind.

5. Strömungsmaschine nach einem der Ansprüche 1 bis 4, **dadurch gekennzeichnet, dass** die Einsetzeinrichtungen (48, 49, 50) jeweils über wenigstens ein Befestigungsmittel (85, 109, 124) in montierter Position der Einsetzeinrichtungen (48, 49, 50) im Bereich der Ausnehmungen (42, 141) an der Wandung (32, 140) gehalten sind.

6. Strömungsmaschine nach einem der Ansprüche 1 bis 5, **dadurch gekennzeichnet, dass** die Einsetzeinrichtungen (48, 49, 50) jeweils an einer in montierter Position der Einsetzeinrichtungen (48, 49, 50) radial äußeren Seite ein griffartiges Element aufweisen.

7. Strömungsmaschine nach einem der Ansprüche 1 bis 6, **dadurch gekennzeichnet, dass** die Einsetzeinrichtungen (48, 49, 50) und die Wandung (32, 140) einen im Querschnitt vergleichbaren Aufbau aufweisen und insbesondere jeweils mit einer schallabsorbierenden Mittelschicht (95), einer Innenschicht (94) und einer Außenschicht (96) ausgeführt sind.

8. Strömungsmaschine nach Anspruch 7, **dadurch gekennzeichnet, dass** die Verbindungseinrichtungen (64, 101, 115) der Einsetzeinrichtungen (48) und/oder die Verbindungseinrichtungen (65, 102, 116) der Wandung (32, 140) jeweils durch die Mittelschicht (95) und/oder die Außenschicht (96) und/oder die Innenschicht (94) der Wandung (32, 140) bzw. der Einsetzeinrichtungen (48, 49, 50) gebildet sind.

9. Strömungsmaschine nach einem der Ansprüche 1 bis 8, **dadurch gekennzeichnet, dass** die Vorkragungen (72, 118) der Einsetzeinrichtungen (48, 49, 50) jeweils mit einem Steg (71) der Einsetzeinrichtungen (48, 49, 50) verbunden sind, der jeweils in montierter Position der Einsetzeinrichtungen (48, 49, 50) auf einer in radialer Richtung (R) der Strömungsmaschine (10) inneren Seite eines Stegs (79) der Wandung (32, 140) angeordnet ist, über die die Vorkragungen (77) jeweils an die Wandung (32, 140) angebunden sind.

10. Strömungsmaschine nach einem der Ansprüche 1 bis 9, **dadurch gekennzeichnet, dass** die Rahmenstruktur (36, 61) der Wandung (32) einen axialen Bereich der Strömungsmaschine (10) in Umfangsrichtung (U) der Strömungsmaschine (10) vollständig umgibt.

## Claims

1. Turbomachine (10) with a wall (32) that extends circumferentially to a central axis (1) of the turbomachine (10) at least in certain areas, wherein the wall (32) has a frame structure (36, 61) that forms multiple recesses (42), wherein multiple insert devices (48, 49, 50) are provided that can be connected to the wall (32, 140) in a releasable manner in the area of recesses (42, 141) which are arranged in the wall (32, 140) and which respectively have a shape that substantially corresponds to the form of a recess (42) of the frame structure (36, 61), **characterized in that** the insert devices (48, 49, 50) respectively have a connection device (64, 101, 115) by means of which the insert devices (48, 49, 50) can be brought into operative connection with connection devices (65, 102, 116) of the wall (32, 140), wherein the connection devices (64, 101, 115) of the insert devices (48, 49, 50) respectively have a projection (72, 118) that, in the mounted state of the insert device (48, 49, 50), extends substantially in the radial direction (R) of the turbomachine (10) at least in certain areas, and that, in the mounted state of the insert devices (48, 49, 50), meshes in grooves (80, 122) of the connection devices (65, 102, 116) of the wall (32, 140), and the connection devices (54, 102, 116) of the wall (32, 140) respectively have a projection (77, 121) that, in the mounted state of the insert devices (48, 49, 50), extends substantially in the radial direction (R) of the turbomachine (10) at least in certain areas, and that in the mounted state of the insert devices (48, 49, 50) mesh in grooves (73, 119) of the connection devices (64, 101, 115) of the insert devices (48, 49, 50), wherein the wall (32, 140) and the insert devices (48, 49, 50) each have multiple projections (72, 77, 118, 121) and grooves (73, 80, 119, 122), wherein the grooves (73, 119) and the projections (72, 118) of the insert devices (48, 49, 50) and the grooves (80, 122) and the projections (77, 121) of the wall (32, 140) form a wave-shaped or a serrated profile in the cross-section, wherein each insert device (48, 49, 50) can be brought into operative connection with the frame structure (36, 61) in a releasable manner in the area of a recess (42), and wherein the recesses (42) of the frame structure (36, 61) and the insert devices (48, 49, 50) are formed in a triangular or hexagonal and/or octagonal manner.

2. Turbomachine according to claim 1, **characterized in that** the projections (72, 118) of the insert devices (48, 49, 50) or the projections (77, 121) of the wall (32) respectively have a surface (74, 81) which is also respectively the surface (74, 81) of the grooves (73, 119) of the insert devices (48, 49, 50) or the grooves (80, 122) of the wall (32, 140).

3. Turbomachine according to claim 1 or 2, **characterized in that** the projections (72, 118) of the insert devices (48, 49, 50) and the projections (77, 121) of the wall (32, 140) are embodied in such a manner that the insert devices (48, 49, 50) can be brought in mesh with the wall (32, 140) in a translational motion (D).

4. Turbomachine according to one of the claims 1 to 3, **characterized in that** the projections (72, 77, 118, 121) and/or the grooves (73, 80, 119, 122) of the insert devices (48, 49, 50) and/or of the wall (32, 140) is or are arranged at the wall (32, 140) in a circumferential manner with respect to an edge areas (68) of the recesses (42) or at the insert devices (48, 49, 50) in a circumferential manner with respect to edge areas (67) of the insert devices (48, 49, 50).

5. Turbomachine according to one of the claims 1 to 4, **characterized in that** the insert devices (48, 49, 50) are respectively retained at the wall (32, 140) in the area of the recesses (42, 141) via at least one attachment means (85, 109, 124) in the mounted position of the insert devices (48, 49, 50).

6. Turbomachine according to one of the claims 1 to 5, **characterized in that** the insert devices (48, 49, 50) respectively have a handle-like element at a radially outer side in the mounted position of the insert devices (48, 49, 50).

7. Turbomachine according to one of the claims 1 to 6, **characterized in that** the insert devices (48, 49, 50) and the wall (32, 140) have a comparable structure in the cross-section and in particular are respectively embodied with a sound-absorbing middle layer (95), an inner layer (94), and an outer layer (96).

8. Turbomachine according to claim 7, **characterized in that** the connection devices (64, 101, 115) of the insert devices (48) and/or the connection devices (65, 102, 116) of the wall (32, 140) are respectively formed by the middle layer (95) and/or the outer layer (96) and/or the inner layer (94) of the wall (32, 140) or of the insert devices (48, 49, 50).

9. Turbomachine according to one of the claims 1 to 8, **characterized in that** the projections (72, 118) of the insert devices (48, 49, 50) are respectively connected to a web (71) of the insert devices (48, 49, 50), which, in the mounted position of the insert devices (48, 49, 50), are respectively arranged on a side of a web (79) of the wall (32, 140) which is internal with respect to the radial direction (R) of the turbomachine (10) and by means of which the projections (77) are connected to the wall (32, 140).

10. Turbomachine according to one of the claims 1 to 9, **characterized in that** the frame structure (36, 61) of the wall (32) completely surrounds an axial area of the turbomachine (10) in the circumferential direction (U) of the turbomachine (10).

## Revendications

1. Turbomachine (10) comprenant une paroi (32) s'étendant au moins en partie circonférentiellement à un axe central (1) de la turbomachine (10), la paroi (32) comportant une structure de cadre (36, 61) formée par une pluralité d'évidements (42), une pluralité de dispositifs d'insertion (48, 49, 50) étant prévus lesquels peuvent être reliés de manière amovible à la paroi (32, 140) dans la région des évidements (42, 141) ménagés dans la paroi (32, 140) et ont chacun une forme sensiblement correspondant à une forme d'un évidement (42) de la structure de cadre (36, 61), **caractérisée en ce que** les dispositifs d'insertion (48, 49, 50) comportent chacun un dispositif de liaison (64, 101, 115) au moyen duquel les dispositifs d'insertion (48, 49, 50) peuvent être reliés fonctionnellement à des dispositifs de liaison (65, 102, 116) de la paroi (32, 140), les dispositifs de liaison (64, 101, 115) des dispositifs d'insertion (48, 49, 50) comportant chacun une saillie (72, 118) qui s'étend, lorsque les dispositifs d'insertion (48, 49, 50) sont montés, au moins en partie substantiellement dans la direction radiale (R) de la turbomachine (10), lesquelles saillies s'engagent, lorsque les dispositifs d'insertion (48, 49, 50) sont montés, dans des rainures (80, 122) des dispositifs de liaison (65, 102, 116) de la paroi (32, 140), et les dispositifs de liaison (54, 102, 116) de la paroi (32, 140) comportant chacun une saillie (77, 121) qui s'étend, lorsque les dispositifs d'insertion (48, 49, 50) sont montés, au moins en partie sensiblement dans la direction radiale (R) de la turbomachine (10), lesquelles saillies s'engagent, lorsque les dispositifs d'insertion (48, 49, 50) sont montés, dans des rainures (73, 119) des dispositifs de liaison (64, 101, 115) des dispositifs d'insertion (48, 49, 50), la paroi (32, 140) et les dispositifs d'insertion (48, 49, 50) comportant chacun une pluralité de saillies (72, 77, 118, 121) et de rainures (73, 80, 119, 122), les rainures (73, 119) et les saillies (72, 118) des dispositifs d'insertion (48, 49, 50) et les rainures (80, 122) et les saillies (77, 121) de la paroi (32, 140) formant en coupe transversale un profil de forme ondulée ou dentelée, chaque dispositif d'insertion (48, 49, 50) pouvant être relié fonctionnellement de manière amovible à la structure de cadre (36, 61) dans la région d'un évidement (42) et les évidements (42) de la structure de cadre (36, 61) et les dispositifs d'insertion (48, 49, 50) ayant une forme triangulaire ou hexagonale et/ou octogonale.

2. Turbomachine selon la revendication 1, **caractérisée en ce que** les saillies (72, 118) des dispositifs d'insertion (48, 49, 50) ou les saillies (77, 121) de la paroi (32) ayant chacune une surface (74, 81) qui est également une surface (74, 81) des rainures (73, 119) des dispositifs d'insertion (48, 49, 50) ou des rainures (80, 122) de la paroi (32, 140).

3. Turbomachine selon la revendication 1 ou 2, **caractérisée en ce que** les saillies (72, 118) des dispositifs d'insertion (48, 49, 50) et les saillies (77, 121) de la paroi (32, 140) sont conçues de telle sorte que les dispositifs d'insertion (48, 49, 50) puissent être amenés en engagement avec le mur (32, 140) dans un mouvement de translation (D).

4. Turbomachine selon l'une des revendications 1 à 3, **caractérisée en ce que** les saillies (72, 77, 118, 121) et/ou les rainures (73, 80, 119, 122) des dispositifs d'insertion (48, 49, 50) et/ou de la paroi (32, 140) sont disposées périphériquement à des régions de bord (68) des évidements (42) au niveau de la paroi (32, 140) ou périphériquement à des zones de bord (67) des dispositifs d'insertion (48, 49, 50) au niveau des dispositifs d'insertion (48, 49, 50).

5. Turbomachine selon l'une des revendications 1 à 4, **caractérisée en ce que** les dispositifs d'insertion (48, 49, 50) sont maintenus chacun par au moins un moyen de fixation (85, 109, 124) dans la position montée des dispositifs d'insertion (48, 49, 50) dans la région des évidements (42, 141) au niveau de la paroi (32, 140).

6. Turbomachine selon l'une des revendications 1 à 5, **caractérisée en ce que** les dispositifs d'insertion (48, 49, 50) comportent chacun un élément de type poignée sur un côté radialement extérieur dans une position montée des dispositifs d'insertion (48, 49, 50).

7. Turbomachine selon l'une des revendications 1 à 6, **caractérisée en ce que** les dispositifs d'insertion (48, 49, 50) et la paroi (32, 140) ont une structure similaire en coupe transversale et sont notamment réalisés chacun avec une couche médiane à absorption acoustique (95), une couche intérieure (94) et une couche extérieure (96).

8. Turbomachine selon la revendication 7, **caractérisée en ce que** les dispositifs de liaison (64, 101, 115) des dispositifs d'insertion (48) et/ou les dispositifs de liaison (65, 102, 116) de la paroi (32, 140) sont formés chacun par la couche médiane (95) et/ou la couche extérieure (96) et/ou la couche intérieure (94) de la paroi (32, 140) ou des dispositifs d'insertion (48, 49, 50).

9. Turbomachine selon l'une des revendications 1 à 8, **caractérisée en ce que** les saillies (72, 118) des dispositifs d'insertion (48, 49, 50) sont reliées chacune à une nervure (71) des dispositifs d'insertion (48, 49, 50), laquelle nervure est disposée, dans la position montée des dispositifs d'insertion (48, 49, 50), sur un côté intérieur d'une nervure (79) de la paroi (32, 140), par référence à une direction radiale (R) de la turbomachine (10), par le biais de laquelle les saillies (77) sont liées chacune à la paroi (32, 140).

10. Turbomachine selon l'une des revendications 1 à 9, **caractérisée en ce que** la structure de cadre (36, 61) de la paroi (32) entoure complètement une région axiale de la turbomachine (10) dans la direction périphérique (U) de la turbomachine (10).
